# EUROPÄISCHE PATENTANMELDUNG

(11) **EP 1 503 173 A2**
(43) Veröffentlichungstag der Anmeldung: **02.02.2005**
(21) Anmeldenummer: 04017732.1
(22) Anmeldetag: 27.07.2004
(51) Int. Cl.: G01B 11/00

(54) **Optisches Messverfahren und Messvorrichtung für Walzstahl**

(30) Priorität: 28.07.2003 DE 10334651
(71) Anmelder: BETRIEBSFORSCHUNGSINSTITUT VDEh, INSTITUT FÜR ANGEWANDTE FORSCHUNG GmbH, D-40237 Düsseldorf (DE)
(72) Erfinder: Woeste, Werner, Dipl.-Ing., 40883 Ratingen (DE)
(74) Vertreter: König, Gregor Sebastian, Dipl.-Biol.

(57) **Zusammenfassung**

Verfahren zum Erfassen von Bildorten, bei dem Bilder durch Lichtleiter oder Lichtleiterbündel aufgenommen, durch den Lichtleiter oder das Lichtleiterbündel zu einem Sensor geleitet und von dem Sensor erfasst werden (Mechanische Bildkonstruktion). Dies erlaubt es, mit einem Sensor mehrere Bilder zu erfassen, die an verschiedenen Orten gelegen sein können und die verschiedenen Bildorte auf diese Weise mechanisch bei dem Sensor zusammenzuführen ohne überschüssige Bildinformationen erfassen zu müssen.

## Beschreibung

Die Erfindung betrifft ein Verfahren zum Erfassen von Bildorten sowie eine Messvorrichtung mit einem Sensor.

In der Praxis ist es bekannt, optische Messverfahren zur Messung beispielsweise von Walzbändern an einem oder mehreren Bildorten einzusetzen. So werden beispielsweise zur Abstandsmessung bei Walzbändern Bildpunkte auf die Bandoberfläche projiziert und mit einer Kamera erfaßt. Wird der Messpunkt in einem Winkel aufprojiziert oder ist die Kamera in einem Winkel zur Bandnormalen bzgl. des Messpunktes angeordnet kann der Abstand bzw. die Höhe des Bandes im Messpunkt ermittelt werden (Triangulation). Für eine Messung des Bandes in seiner Gesamtbreite sind in der Regel mehrere Messorte (Bildorte) erforderlich. Dies wird in der Praxis mit Flächenkameras gelöst, bei denen ein größerer Abstand der Kamera oder Weitwinkelobjektive oder mehrere Kameras erforderlich sind. Bei Verwendung nur einer einzelnen Kamera lässt sich aus physikalischen gründen nicht vermeiden, dass mit zunehmender Breite des zu erfassenden Bereichs und des hierfür notwendigen größeren Aufnahmewinkels der Kamera bzw. großen Abstands der Kamera die Auflösung abnimmt. Die Verwendung mehrerer Kameras oder Sensoren ist kostenträchtig aber unvermeidbar, wenn in unterschiedlichen Prozessen oder Prozessstufen an unterschiedlichen Orten, beispielsweise Lage eines Bandes und Durchmesser eines Drahtes gemessen werden soll.

Im medizinischen Bereich ist für die optische Analyse von schwer zugänglichen Objekten die Aufnahmetechnik der Endoskopie bekannt. Hier werden Untersuchungen im Körperinneren eines Menschen vorgenommen, indem ein Lichtleiterbündel in den Körper eingeführt wird, das an seinem einen Ende ein Bild der zu untersuchenden Körperstelle aufnimmt und dieses Bild zu einer Kamera oder zu einem Betrachter weiterleitet.

Der Erfindung liegt nun die Aufgabe zugrunde, ein Abbildungsverfahren vorzuschlagen, das es erlaubt, abzubildende Objekte von verschiedenen Orten an einem Ort zusammenzuführen.

Diese Aufgabe wird durch den Gegenstand der nebengeordneten Ansprüche gelöst. Vorteilhafte Ausgestaltungen sind in den Unteransprüchen angegeben.

Als Lichtleiter werden im Sinne der vorliegenden Erfindung einzelne Lichtleiter aber auch Lichtleiterbündel, insbesondere Glasfasern oder gleichwertige geführte Lichtwellen leitende Elemente verstanden. Ferner werden unter Lichtleiter im Sinne der vorliegenden Erfindung auch optische Linsen sowie Spiegel verstanden, die Lichtwellen unterschiedlicher Bildorte an einem ausgewählten Ort zusammenführen können.

Als Bild im Sinne der vorliegenden Erfindungen werden alle Arten von optisch erfassbaren Signalen jeder geometrischen Ausgestaltung einschließlich einzelner Bildpunkte verstanden. Ein Bildort ist der Ort an dem ein solches Bild entsteht.

Als Sensor wird jede optische Vorrichtung verstanden, insbesondere eine Flächen- oder Zeilenkamera verstanden, die das Erfassen von Bildern erlaubt. Als Sensor wird insbesondere eine Licht in andere, beispielsweise elektrische Signale umwandelnde Vorrichtung verstanden. Insbesondere ist als Sensor eine Flächenkamera für das erfindungsgemäße Verfahren besonders geeignet. Als Sensor im Sinne der vorliegenden Erfindung ist auch das menschliche Auge zu verstehen.

Die Erfindung basiert auf dem Grundgedanken, Bilder von verschiedenen Orten zusammenzuführen indem der Strahlengang mittels eines Lichtleiters zu einem gewünschten Ort geführt wird. Dieses Konzept wird im folgenden als mechanische Bildkonstruktion bezeichnet und bietet gegenüber der verbreiteten elektronischen Bildkonstruktion den Vorteil, dass überflüssige Bildinformation gar nicht erst erfasst werden muß, anstatt nach dem Erfassen elektronisch herausgefiltert zu werden.

Das erfindungsgemäße Verfahren zur mechanischen Bildkonstruktion sieht vor, dass der Strahlengang jedes Bildortes durch einen Lichtleiter beispielsweise zu einem Sensor geführt wird. Die durch den geführten Strahlengang gerichtet transportierten Bildpunkte können beispielsweise von einer Zeilen- oder Flächen-CCD-Kamera mit entsprechender Bildverarbeitungssoftware, erfasst und verarbeitet werden, ohne dass diese auf das Meßobjekt ausgerichtet sein muss. Dies erlaubt es, mit einem oder wenigen Sensoren mehrere Bildorte zu erfassen und diese mechanisch zusammenzuführen ohne überschüssige Bildinformationen aus Zwischenbereichen erfassen zu müssen, wie dies beispielsweise bei Weitwinkelobjektiven zum Erfassen mehrerer Bildorte unvermeidbar ist.

Die mechanische Bildkonstruktion eignet sich somit in beliebigen technischen Bereichen zum Zusammenführen von Bildern verschiedener Orte an einem gemeinsamen geometrischen Ort und erlaubt beispielsweise bei der elektronischen Bildverarbeitung eine anschließende konzentrierte Erfassung durch einen Sensor und Wandlung (Digitalisierung) der zusammengesetzten Bildinformation bei optimaler Ausnutzung der Sensorkapazität und Steigerung des Verhältnisses von Nutzdaten zu Gesamtdaten und Vermeidung zusätzlicher elektronischer Verarbeitungskapazität.

Erfindungsgemäß können mehrere Lichtleiter Bilder unterschiedlicher Bildorte beispielsweise unterschiedlicher Bandabschnitte einer Walzstraße zusammenführen. Dies vermeidet es, den Aufnahmewinkel der Kamera auf Kosten der Auflösung erhöhen zu müssen oder alternativ mehrere Kameras einsetzen zu müssen und ist insbesondere für Breite Bänder oder beliebig verteilte Messstellen vorteilhaft.

Darüber hinaus können auch Bildorte unterschiedlicher Prozessstufen oder sogar unterschiedlicher Prozesse beispielsweise zur Messung der Dicke eines Drahtes und der Lage eines Walzbandes zusammengeführt werden. Die Lichtleiter können folglich benachbart zueinander angeordnete Bildorte oder auch räumlich beliebig zueinander beabstandete Bildorten aufnehmen und zusammenführen.

So kann beispielsweise die Position der Bandkante an mehreren Orten der Walzstraße aufgenommen werden. Hierzu werden über die Walzstraße verteilt Lichtleiter angeordnet. Diese führen die von Ihnen aufgenommenen Abbilder der Bandkanten zur Erkennung durch einen Sensor zusammen. Hierdurch kann wiederum vermieden werden, dass für jede Messstelle eine gesonderte Kamera mit entsprechenden Kosten vorgesehen werden muss.

Gemäß einer Ausführungsform der Erfindung in der Walzstraße können die mehreren Bildorte in Form der unterschiedlichen Bandabschnitte gleichzeitig von einem Sensor erkannt und digitalisiert in der Computeranlage der Walzstraße verarbeitet werden sowie durch nachgeschaltete Filterverfahren analysiert werden. Die so gewonnenen Informationen können einer Regelung des Walzprozesses zugeführt werden. Hierdurch wird eine besonders kostengünstige Online-Überwachung des Walzprozesses möglich.

Gemäß einer Ausführungsform des erfindungsgemäßen Messverfahrens wird ein Ende eines Lichtleiters relativ zur Bandoberfläche bewegt. Hierdurch können mit einem einzigen Lichtleiter mehrere Bandabschnitte vermessen werden. Auf diese Weise kann zusätzlich die Zahl der zu verwendenden Lichtleiter reduziert werden.

Insbesondere um eine rasche großflächige Vermessung eines Bandes vornehmen zu können, können die Enden der mehreren Lichtleiter gemäß einer bevorzugten Ausführungsform synchron bewegt werden.

Gemäß einer weiteren Ausführungsform wird ein Muster auf die Bandoberfläche projiziert. Ein Abbild dieses Musters bzw. von Abschnitten des Musters kann durch ein Ende des Lichtleiters aufgenommen und durch den Lichtleiter zu einer Kamera geleitet werden, wo es erkannt wird. Die Analyse eines derartigen Musters kann beispielsweise vorteilhaft zur Planheitsmessung einer Bandoberfläche eingesetzt werden.

Es lassen sich aber auch verschiedene Messarten kombinieren, so dass beispielsweise ein flächiges Bild von einem Lichtleiter mit einer punktförmigen Hell/Dunkel- oder einer Farbinformation und einer Zeileninformation zusammengeführt wird

Im Folgenden wird die erfindungsgemäße Messvorrichtung beschrieben. Diese weist einen Sensor und mehrere Lichtleiter auf, die so angeordnet werden können, dass der Strahlengang unterschiedlicher Bildorte zusammengeführt werden kann. Eine derartige Messvorrichtung bietet entsprechend dem beschriebenen Verfahren den Vorteil, dass zeitgleich Informationen über unterschiedliche Messorte erfasst werden können. Dies kann vorteilhaft in Stahlverarbeitungsprozessen, insbesondere in einer Walzanlage wie zuvor bereits beispielhaft bei der Messung der Bandkantenlage beschrieben, eingesetzt werden.

Vorzugsweise weisen die ersten Enden der Lichtleiter eine feste räumliche Anordnung zueinander auf.

Eine weitere Ausführungsform der erfindungsgemäßen Messvorrichtung weist Positioniermittel für eines oder mehrere der ersten Enden der Lichtleiter auf.

Das erfindungsgemäße Verfahren und die erfindungsgemäße Vorrichtung sind jedoch nicht auf die beschriebenen Einsatzbereiche beschränkt. Vielmehr läßt sich die mechanische Bildkonstruktion auch in anderen Bereichen vorteilhaft einsetzen, Insbesondere lässt sich die mechanische Bildkonstruktion in allen Fällen einsetzen, in denen mindestens zwei Objekte abgebildet werden sollen während nur eine Kamera zur Verfügung steht oder aus Kosten- bzw. Effizienzgründen stehen soll. Dies ist für alle Bereiche der Technik denkbar, in denen Sensoren oder Kameras verwendet werden, die sich mit Lichtleitern verbinden lassen. Besonders vorteilhaft lässt sich die Erfindung mit einer CCD-Kamera einsetzen. Dabei ist es denkbar, dass von beliebigen Bündelanordnungen bis zu einem Lichtleiter pro Pixel vorgesehen sein kann. Anstelle der Lichtleiter lassen sich hierfür auch unterschiedlich ausgerichtete Optiken oder Spiegel einsetzen, um die Abbildungen der Messorte erfindungsgemäß zusammenzuführen.

Nachstehend wird die Erfindung anhand einer lediglich ein Ausführungsbeispiel darstellende Zeichnung näher erläutert. Darin zeigen:
- Fig. 1: eine schematische Darstellung einer Walzanlage in einer Draufsicht (a), einer Seitenansicht (b) und eine von einer Kamera betrachtete Projektionsfläche der zu dieser Projektionsfläche zusammengeführten zweiten Enden der Lichtleiter (c)
- Fig. 2: eine erweiterte Ausführungsform der Fig. 1 mit zusätzlichen Sensoren für verschiedene Bandparameter wie Bandende, Planheit und Bandhöhe.

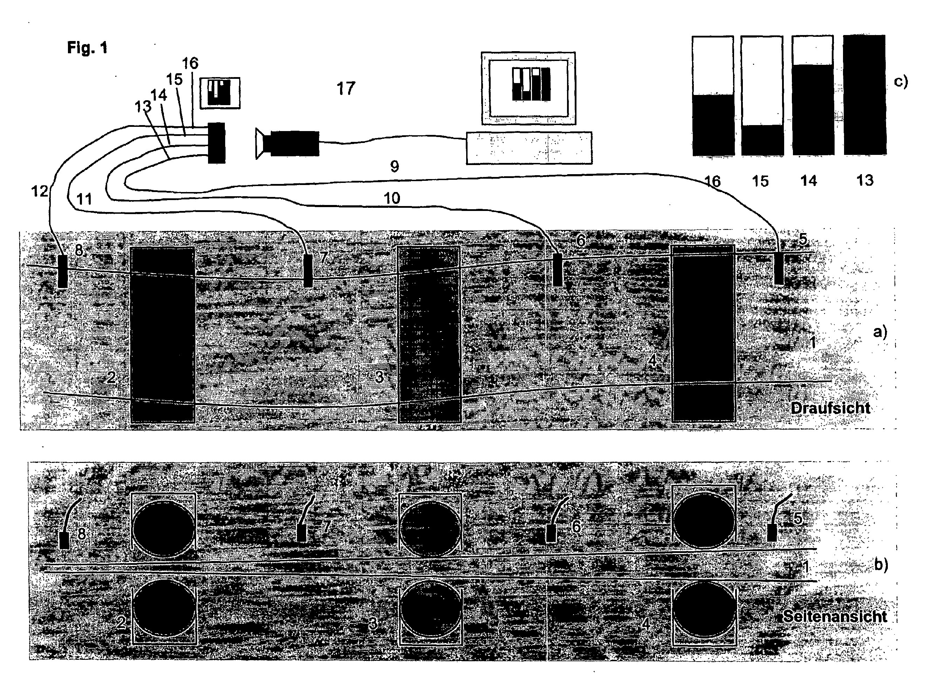

Fig. 1 a), b), zeigt eine Walzstraße zum Walzen eines Bands 1 mit Walzgerüsten 2, 3, 4. In Walzrichtung vor den Walzgerüsten 4, 3, 2 und nach dem Walzgerüst 2 sind erste Enden 5, 6, 7, 8 von Lichtleitern 9, 10, 11, 12 angeordnet. Die zweiten Enden 13, 14, 15, 16 sind zusammengefasst und nebeneinander angeordnet. Sie sind auf eine Kamera 17 ausgerichtet. Die ersten Enden 5, 6, 7, 8 der Lichtleiter 9, 10, 11, 12 sind im Bandkantenbereich des Bands 1 angeordnet. Sie nehmen dort ein Abbild des ihnen zugeordneten Bandabschnitts auf und leiten dieses Abbild zu ihren zweiten Enden 13, 14, 15, 16 weiter, wo das Abbild von der Kamera 17 erkannt wird.

Fig. 1 c) zeigt die zweiten Enden 13, 14, 15, 16 der Lichtleiter 9, 10, 11, 12 wie sie von der Kamera gesehen werden. Die an den zweiten Enden wiedergegebenen Abbilder werden durch die Kamera 17 als gemeinsames Bild erfasst. Durch nachgeschaltete Analyseverfahren kann das so erkannte Bild in Informationen über die Bandlage umgewandelt werden. So kann erkannt werden, dass das Band vor dem ersten Walzgerüst 4 (erkannt durch das erste Ende 5 des Lichtleiters 9) eine zur Bandlage vor dem zweiten Walzgerüst 3 (erkannt durch das erste Ende 6 des Lichtleiters 10) deutlich unterschiedliche Lage aufweist. Diese Information kann eingesetzt werden, um Stellgrößen des Walzgerüsts 4 einzustellen und die Bandlage auf einen festgelegten Sollwert einzustellen.

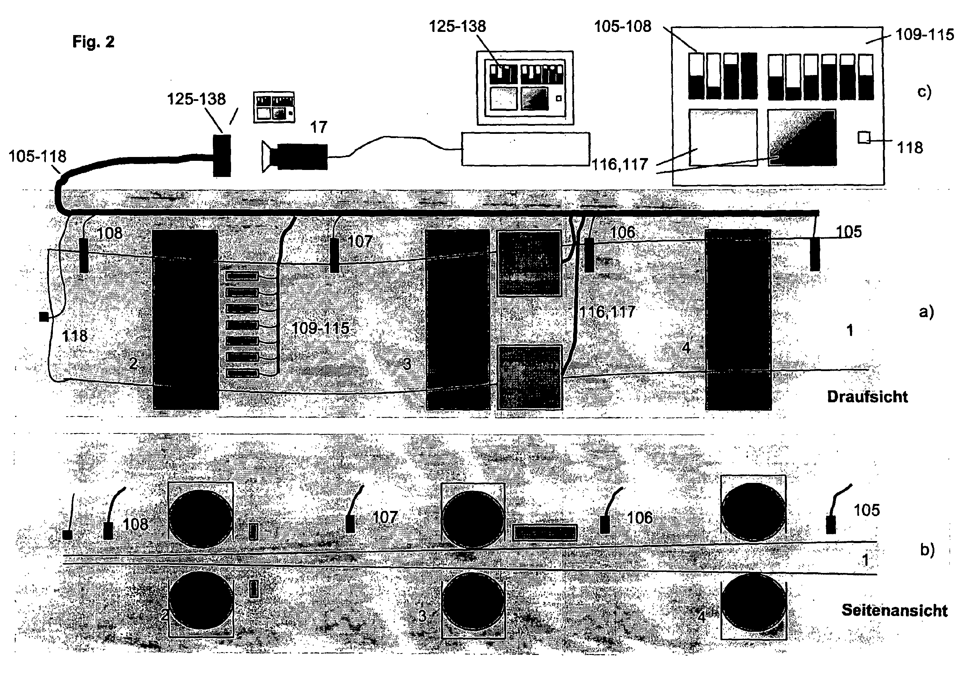

Fig. 2 zeigt den analogen Aufbau der Fig.1, jedoch mit erweitertem Anwendungsbereich. Die Lichtleiter 105 bis 118 leiten die Lichtsignale von den verschiedenen Sensoren (Bandkante, Bandende, Bandhöhe, Planheit) an die zweiten Enden 125 bis 138, wo das Abbild von der Kamera erkannt wird. Fig. 2 c zeigt die zweiten Enden 105 bis 108, 109 bis 115, 116 und 117 sowie 118 als Kombination (mechanische Bildkonstruktion) von Bildern unterschiedlicher Sensortypen in einer Kamera und schließlich auf einem Bildschirm.

## Patentansprüche

1. Verfahren zum Erfassen von Bildorten, insbesondere in einer Walzstraße, bei dem die Strahlengänge mindestens zweier beabstandeter Bildorte durch mindestens zwei Lichtleiter an einem Ort zusammengeführt werden.

2. Verfahren nach Anspruch 1, **dadurch gekennzeichnet, dass** die Strahlengänge von mindestens einem Sensor erfasst und digitalisiert werden.

3. Verfahren nach Anspruch 2, **dadurch gekennzeichnet, dass** auf dem Sensor flächige und/oder zeilenförmige und/oder punktförmige Bildinformationen abgebildet werden.

4. Messverfahren für eine Walzstraße nach Anspruch 1, **dadurch gekennzeichnet, dass** das Ende eines Lichtleiters relativ zur Bandoberfläche bewegt wird.

5. Messverfahren nach Anspruch 4, **dadurch gekennzeichnet, dass** die Enden mehrerer Lichtleiter synchron bewegt werden.

6. Messverfahren nach einem der Ansprüche 1 bis 5, **dadurch gekennzeichnet, dass** Messraster oder andere optisch erfassbare Strukturen oder Bildpunkte auf die Bandoberfläche projiziert oder aufgebracht werden.

7. Vorrichtung mit mehreren Lichtleitern, die sich so anordnen lassen, dass unterschiedliche Bildorte gleichzeitig erfasst und die Strahlengänge der Bildorte an einem Ort zusammengeführt werden können.

8. Messvorrichtung nach Anspruch 7, **dadurch gekennzeichnet, dass** die den Strahlengang aufnehmenden Enden der Lichtleiter eine feste räumliche Anordnung zueinander aufweisen.

9. Messvorrichtung nach Anspruch 7 oder 8, **gekennzeichnet durch** Positioniermittel für eines oder mehrere der ersten Enden der Lichtleiter.
